# FASCICULE DE BREVET EUROPEEN

(11) **EP 1 904 883 B1**
(45) Date de publication et mention de la délivrance du brevet: **01.07.2015**
(21) Numéro de dépôt: 06794179.9
(22) Date de dépôt: 13.07.2006
(51) Int. Cl.: G02C 7/08, G02C 7/10, G02F 1/1333, G02C 7/02

(54) **COMPOSANT OPTIQUE PIXELLISE A PAROIS APODISEES, SON PROCEDE DE FABRICATION ET SON UTILISATION DANS LA FABRICATION D'UN ELEMENT OPTIQUE TRANSPARENT**
GEPIXELTE OPTISCHE KOMPONENTE MIT APODISIERTEN WÄNDEN, HERSTELLUNGSVERFAHREN DAFÜR UND VERWENDUNG DAVON BEI DER HERSTELLUNG EINES TRANSPARENTEN OPTISCHEN ELEMENTS
PIXELLIZED OPTICAL COMPONENT WITH APODIZED WALLS, METHOD FOR MAKING SAME AND USE THEREOF IN MAKING A TRANSPARENT OPTICAL ELEMENT

(30) Priorité: 20.07.2005 FR 0507717
(43) Date de publication de la demande: 02.04.2008
(73) Titulaire: ESSILOR INTERNATIONAL (COMPAGNIE GENERALE D'OPTIQUE), 94220 Charenton-le-Pont (FR)
(72) Inventeur: BOVET, Christian, F-94220 Charenton-Le-Pont (FR); CANO, Jean-Paul, F-94220 Charenton-le-Pont (FR); MATHIEU, Gilles, F-34080 Montpellier (FR)
(74) Mandataire: Cabinet Plasseraud
(86) Numéro de dépôt international: PCT/FR2006/001724
(87) Numéro de publication internationale: WO 2007/010124

(56) Documents cités:
- WO-A-03/012542
- DE-A1- 19 714 434
- US-A- 3 978 580
- US-A- 5 067 795
- US-A1- 2002 140 899
- US-A1- 2003 152 849

## Description

La présente invention concerne la réalisation d'éléments transparents incorporant des fonctions optiques. Elle s'applique notamment à la réalisation de verres ophtalmiques ayant diverses propriétés optiques.

Les verres correcteurs d'amétropie sont traditionnellement fabriqués en mettant en forme un matériau transparent d'indice de réfraction plus élevé que l'air. La forme des verres est choisie de façon que la réfraction aux interfaces entre le matériau et l'air provoque une focalisation appropriée sur la rétine du porteur. Le verre est généralement découpé pour être adapté à une monture, avec un positionnement approprié par rapport à la pupille de l'oeil corrigé.

Parmi les différents types de verres, ou d'autres non nécessairement limités à l'optique ophtalmique, il serait souhaitable de pouvoir proposer une structure qui permette de mettre en place une ou plusieurs fonction(s) optique(s) de façon souple et modulaire, tout en conservant la possibilité de découper l'élément optique obtenu en vue de l'intégrer à une monture imposée ou choisie par ailleurs, ou à tout autre moyen de maintien dudit élément optique.

Un but de la présente invention est de répondre à ce besoin. Un autre but est que l'élément optique soit industrialisable dans de bonnes conditions.

L'invention propose ainsi un procédé de réalisation d'un élément optique transparent selon la revendication 1.

L'invention propose également un procédé de réalisation d'un élément optique transparent composant optique le long d'un contour défini sur ladite surface, correspondant selon la revendication 21.

Les cellules peuvent être remplies avec des substances diverses choisies pour leurs propriétés optiques, par exemple liées à leur indice de réfraction, à leur capacité d'absorption lumineuse ou de polarisation, à leur réponse à des stimuli électriques ou lumineux, etc.

US 3 978 580 et US 2003/152849 divulguent des moyens d'affichage à "micro-cups" et leur production ayant des parois apodisées.

US 2002/140899 et US 5 067 795 divulguent des verres de lunettes ayant une région à index réfractif réglable.

DE 197 14 434 divulgue des lunettes comportant des verres de lunettes ayant une pluralité de régions à index réfractif réglable, les régions étant réglables séparément.

La structure se prête donc à de nombreuses applications, particulièrement celles faisant appel à des fonctions optiques évoluées. Elle implique une discrétisation par pixels de la surface de l'élément optique, ce qui offre une grande souplesse dans la conception mais aussi dans la mise en oeuvre de l'élément. Cette discrétisation par pixel se traduit ainsi à la surface du composant optique par la réalisation d'un réseau de cellules, les cellules étant séparées par des parois, celles-ci présentant un profil apodisé. Un tel profil de paroi est particulièrement avantageux pour la réalisation d'un composant optique transparent et sans perte de contraste d'une image observée au travers dudit composant.

Il est possible de réaliser des structures pixellisées par discrétisation qui consistent en une succession de cellules adjacentes dans le plan. Ces cellules sont séparées par des parois. Ces parois sont à l'origine d'un défaut de transparence du composant otique.

Au sens de l'invention on entend qu'un composant optique est transparent lorsque l'observation d'une image au travers dudit composant optique est perçue sans perte significative de contraste, c'est-à-dire lorsque la formation d'une image au travers dudit composant optique est obtenue sans nuisance de la qualité de l'image. Cette définition du terme transparent, est applicable, au sens de l'invention, à l'ensemble des objets qualifiés en tant que tel dans la description.

Les parois séparant les cellules du composant optique interagissent avec la lumière, en la diffractant. La diffraction est définie comme le phénomène d'éparpillement de la lumière que l'on observe lorsqu'une onde lumineuse est matériellement limitée (J-P. Perez - Optique, fondements et Applications - 7ème édition - Dunod - Octobre 2004 - page 262). Ainsi un composant optique comprenant de telles parois transmet une image dégradée du fait de cet éparpillement de la lumière induit par lesdites parois. Cette diffraction microscopique se traduit macroscopiquement par de la diffusion, et dans le cas d'une source ponctuelle cette diffraction microscopique se caractérise par une tâche de diffusion, laquelle se traduit par une perte de contraste de l'image observée au travers de ladite structure. Cette perte de contraste est assimilable, au sens de l'invention, à une perte de transparence telle que définie précédemment. Ceci n'est pas acceptable pour la réalisation d'un élément optique comprenant un composant optique pixellisée tel que compris au sens de l'invention. Ceci est d'autant plus vrai dans le cas où ledit élément optique est une lentille ophtalmique, laquelle doit d'une part être transparente et d'autre part ne comporter aucun défaut cosmétique pouvant gêner la vision du porteur d'un tel élément optique.

Un but de la présente invention est de diminuer cette tâche de diffusion afin de réduire la perte de contraste. La réalisation d'un réseau de cellules présentant des parois à profil apodisées permet de diminuer l'étalement de la tâche de diffusion et donc permet d'augmenter la transparence de l'objet comprenant un tel réseau.

L'énergie de la lumière, qui rencontre une paroi, est concentrée dans un angle solide et sa perception devient une tâche de diffusion présentant un angle θ, une longueur D et une intensité lumineuse I. Pour minimiser la diffusion, il est nécessaire de pouvoir influer sur au moins un de ces trois paramètres (θ, D, I). L'intensité est principalement due au nombre de parois présentes au sein du composant et à leur distribution à la surface dudit composant optique. La longueur D est plus liée à la géométrie des parois, et un moyen de minimiser ce terme consiste à apodiser les parois séparant les cellules du réseau constitutif du composant optique pixellisé. En apodisant les parois, on diminue au niveau local la longueur de la tâche de diffusion par suppression des lobes secondaires.

Au sens de l'invention par apodiser on entend lisser la forme des parois. Ce lissage revient à la réalisation d'un filtre qui supprime les hautes fréquences spatiales du spectre de Fourier et permet ainsi d'éviter la diffraction aux grands angles. L'élimination de la diffraction aux grands angles conduit à une amélioration du contraste et donc une amélioration de la qualité de l'image perceptible au travers un tel système pixellisé. Cet apodisation, au sens de l'invention, correspond ainsi à un lissage géométrique des parois.

L'apodisation se traduit ainsi par une modification du profil des parois consistant à la suppression des arêtes. Plus particulièrement, cette modification consiste à lisser (ou émousser) au moins une arrête de la paroi notamment par arrondissement de cette dernière jusqu'à l'obtention éventuelle d'un profil gaussien des parois. Le lissage de l'arête permet donc de transformer un angle vif d'une paroi, proche de 90°, en un segment curviligne. Ce segment curviligne peut s'étendre sur une distance variable au niveau des flancs des parois. Dans le cadre de l'invention l'apodisation comprend aussi la réalisation d'un réseau de parois tel que décrit précédemment et dans lequel chacun des deux flancs desdites parois présentent une pente identique ou différente parallèlement à la surface du substrat.

Par définition chaque parois comprend quatre arêtes, deux à son sommet et deux à sa base. Par base de la paroi, on entend au sens de l'invention le côté de la paroi parallèle à la surface du substrat se situant à la plus courte distance dudit substrat. Par sommet de la paroi, on entend au sens de l'invention le côté de la paroi parallèle à la surface du substrat se situant à la plus longue distance dudit substrat, c'est-à-dire du côté opposé au substrat. Le lissage des arêtes est réalisé à la base et/ou au sommet des parois. Avantageusement chaque paroi présente au moins une arête lissée à son sommet. Préférentiellement chaque paroi présente un lissage des arêtes à son sommet. Le lissage des arêtes de la paroi peut être symétrique ou asymétrique. Il est également possible dans le cadre de l'invention que le réseau de cellules comprenne des parois comportant des profils apodisés différentes.

Dans un premier mode de réalisation, le lissage des arêtes peut notamment être obtenu par un procédé de gravure chimique ou physico-chimique. Parmi les procédés de gravure utilisables dans cette application, on peut citer à titre d'exemple la gravure plasma.

Dans un second mode de réalisation de l'invention, le profil apodisé des parois est obtenu directement lors de la production desdites parois, par utilisation d'un masque placé à une distance variable et contrôlé du matériau lors du procédé de réalisation des parois. L'utilisation d'un tel masque est compatible avec les procédés de fabrication des parois et donc les procédé de réalisation du réseau de cellules. Parmi ces procédés, on peut citer à titre illustratif et non limitatif, les procédés tels que l'impression à chaud, l'embossage à chaud, le micro moulage, la photolithographie (hard, soft, positive, négative), la microdéposition telle que l'impression par micro-contact, la sérigraphie, ou encore l'impression par jet de matière. D'une façon avantageuse pour la réalisation d'un profil apodisé par utilisation d'un masque, on utilise un procédé de fabrication des parois choisi parmi le micromoulage et la photolithographie.

Il est également possible lors de la réalisation du réseau de cellules et donc du réseau de parois à profil apodisé, de combiner un procédé de fabrication desdites parois tels que décrit précédemment à au moins un procédé de gravure.

La géométrie du réseau de cellules se caractérise par des paramètres dimensionnels qui peuvent généralement se ramener aux dimensions (d) des cellules parallèlement à la surface du composant optique, à leur hauteur correspondant à la hauteur (h) des parois qui les séparent, et à l'épaisseur (e) de ces parois (mesurée parallèlement à la surface du composant). Parallèlement à la surface du composant optique, les cellules sont de préférence séparées par des parois d'épaisseur (e) comprise entre 0,10 µm et 10 µm, préférentiellement entre 0,5 µm et 8 µm. Compte tenu du profil apodisé des parois et donc du lissage des arêtes desdites parois, leur épaisseur à la base est supérieure à leur épaisseur à la tangente de leur sommet. D'une façon avantageuse une paroi à profil apodisé présente une épaisseur à la tangente de son sommet (S) comprise entre 5% et 95% de l'épaisseur à sa base (B).

Les parois présentent une hauteur comprise entre 1 µm et 50 µm, et préférentiellement entre 1 µm et 20 µm.

Comme décrit précédemment les parois à profil apodisé présentent un lissage de leurs arêtes à leur base et/ou leur sommet, et présentent éventuellement des flancs à pente identique ou différente. La pente du flanc d'une paroi est comprise entre 90° et 15°, préférentiellement entre 90° et 45° par rapport à une droite parallèle à la surface du substrat.

L'ensemble des parois (et par conséquent l'ensemble des cellules du composant optique) peut être formé directement sur un support transparent rigide, ou au sein d'un film transparent souple reporté ensuite sur un support transparent rigide. Ledit support transparent rigide peut être convexe, concave, ou plan sur le côté recevant l'ensemble des cellules.

Dans le cadre de l'invention, l'ensemble de cellules juxtaposées est de préférence configuré de façon à ce que le facteur de remplissage τ, défini comme la surface occupée par les cellules remplies par la substance, par unité de surface du composant, soit supérieur à 90 %. En d'autres termes, les cellules de l'ensemble occupent au moins 90 % de la surface du composant, du moins dans une région du composant pourvue de l'ensemble de cellules. D'une façon avantageuse le facteur de remplissage est compris entre 90 % et 99,5 % inclus.

La substance à propriété optique contenue dans certaines au moins des cellules est sous forme de liquide ou de gel. Ladite substance peut notamment présenter au moins une des propriétés optiques choisies parmi la coloration, le photochromisme, la polarisation et l'indice de réfraction.

Un objet de la présente invention est également un procédé de production d'un composant optique tel que défini précédemment, qui comprend la formation sur un substrat d'un réseau de parois à profil apodisé pour délimiter les cellules parallèlement à ladite surface du composant, un remplissage collectif ou individuel des cellules avec la substance à propriété optique sous forme de liquide ou de gel, et la fermeture des cellules sur leur côté opposé au substrat.

L'ensemble de cellules du composant optique peut inclure plusieurs groupes de cellules contenant des substances différentes. De même chaque cellule peut être remplie avec une substance présentant une ou plusieurs propriétés optiques telles que décrites précédemment. Il est également possible d'empiler plusieurs ensembles de cellules sur l'épaisseur du composant. Dans ce mode de réalisation les ensembles de cellules peuvent avoir des propriétés identiques ou différentes au sein de chaque couche, ou les cellules au sein de chaque ensemble de cellules peuvent également présenter des propriétés optiques différentes.

Un autre aspect de l'invention se rapporte à un composant optique, utilisé dans le procédé ci-dessus. Ce composant optique comprend au moins un ensemble transparent de cellules juxtaposées parallèlement à une surface du composant, chaque cellules étant séparées par des parois à profil apodisé. Chaque cellule est hermétiquement fermée et contient au moins une substance à propriété optique.

Un autre aspect encore de l'invention se rapporte à un élément optique transparent, notamment un verre de lunette, réalisé en découpant un tel composant optique. Un verre de lunette comprend une lentille ophtalmique. Par lentille ophtalmique, on entend les lentilles s'adaptant à une monture de lunette pour protéger l'oeil et/ou corriger la vue, ces lentilles étant choisies parmi les lentilles afocales, unifocales, bifocales, trifocales et progressives. Si l'optique ophtalmique est un domaine d'application préféré de l'invention, on comprendra que cette invention est applicable à des éléments optiques transparents d'autres natures, comme par exemple des lentilles pour instruments d'optiques, des lentilles de visée optique, des visières oculaires, etc. Au sein de l'invention, on inclut dans l'optique ophtalmique les lentilles ophtalmiques, mais aussi les lentilles de contact et les implants oculaires.

D'autres particularités et avantages de la présente invention apparaîtront dans la description ci-après d'exemples de réalisation non limitatifs, en référence aux dessins annexés, dans lesquels:
- la figure 1 est une vue de face d'un composant optique selon l'invention;
- la figure 2 est une vue de face d'un élément optique obtenu à partir de ce composant optique;
- la figure 3 est une vue schématique en coupe d'un composant optique selon un mode de réalisation de l'invention;
- les figures 4a à 4e représentent une vue de face de différent profil de parois, le figure 4a représentant une paroi à profil non apodisé et les figures 4b à 4e représentant une paroi à profil apodisé.

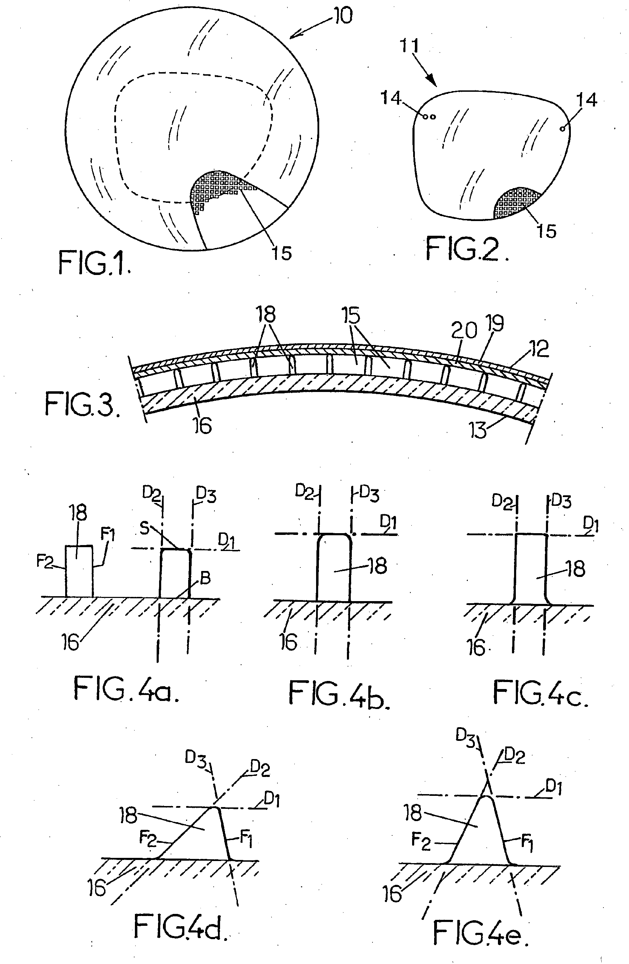

Le composant optique 10 représenté sur la figure 1 est une ébauche pour verre de lunettes. Un verre de lunettes comprend une lentille ophtalmique, telle que définie précédemment. Naturellement si l'optique ophtalmique est un domaine d'application préféré de l'invention, on comprendra que cette invention est applicable à des éléments optiques transparents d'autres natures.

La figure 2 montre un verre de lunette 11 obtenu en découpant l'ébauche 10 suivant un contour prédéfini, représenté en trait interrompu sur la figure 1. Ce contour est a priori arbitraire, dès lors qu'il s'inscrit dans l'étendue de l'ébauche. Des ébauches fabriquées en série sont ainsi utilisables pour obtenir des verres adaptables à une grande variété de montures de lunettes. Le bord du verre découpé peut sans problème être détouré, de façon classique, pour lui conférer une forme adaptée à la monture et au mode de fixation du verre sur cette monture et/ou pour des raisons esthétiques. Il est possible d'y percer des trous 14, par exemples pour recevoir des vis servant à la fixation sur la monture.

La forme générale de l'ébauche 10 peut être conforma aux standards de l'industrie, avec par exemple un contour circulaire de diamètre 70 mm (millimètre), une face avant convexe 12, et une face arrière concave 13 (figure 3). Les outils traditionnels de découpe, de détourage et de perçage peuvent ainsi être utilisés pour obtenir le verre 11 à partir de l'ébauche 10.

Sur les figures 1 et 2, un arrachement partiel des couches superficielles fait apparaître la structure pixellisée de l'ébauche 10 et du verre 11. Cette structure consiste en un réseau de cellules ou microcuves 15 formées dans une couche 17 du composant, chaque cellules étant séparées par des parois à profil apodisé 18 (figure 3). Sur ces figures, les dimensions de la couche 17, des parois 18, et des cellules 15 ont été exagérées par rapport à celles de l'ébauche 10 et de son substrat 16 afin de faciliter la lecture du dessin.

La couche 17 incorporant le réseau de cellules 15 peut être recouverte par un certain nombre de couches additionnelles 19, 20 (figure 1), comme il est usuel en optique ophtalmique. Ces couches ont par exemple des fonctions de résistance aux chocs, de résistance à la rayure, de coloration, d'anti-reflet, d'anti-salissure, etc. Dans l'exemple représenté, la couche 17 incorporant le réseau de cellules est placée immédiatement au-dessus du substrat transparent 16, mais on comprendra qu'une ou plusieurs couches intermédiaires peuvent se trouver entre eux, tels que des couches présentant des fonctions de résistance aux chocs, de résistance à la rayure, de coloration.

D'autre part, il est possible que plusieurs réseaux de cellules soient présents dans l'empilement de couches formé sur le substrat. Il est ainsi possible, par exemple, que l'empilement des couches comporte notamment une couche de réseaux de cellules contenant une substance permettant de conférer à l'élément des fonctions photochromiques, une autre couche permettant de conférer à l'élément des fonctions de variations d'indice de réfraction. Ces couches de réseaux de cellules peuvent également être alternées avec des couches additionnelles. En effet, la couche incorporant le réseau de cellules peut être recouverte par un certain nombre de couches additionnelles, comme il est usuel en optique ophtalmique. Ces couches ont par exemple des fonctions de résistance aux chocs, de résistance à la rayure, de coloration, d'anti-reflet, d'anti-salissure, etc.

La figure 4a représente une paroi 18 à profil non apodisé décrite ici en tant que référence. Cette paroi comporte une base (B) et un sommet (S) tel que défini précédemment. Le sommet et la base comportent chacun deux arrêtes présentant des angles vifs proches de 90°. La droite (D1) symbolise la tangente au sommet de ladite paroi. Les droites D2 et D3 symbolisent les droites tangentes à chaque flanc d'une paroi. Dans le cas d'une paroi à profil non apodisé chacun des flancs (F1, F2) de ladite paroi est perpendiculaire à la droite D1 laquelle est parallèle au substrat 16 ou au film servant de support aux parois qui peut être ensuite reporté sur un substrat 16.

La figure 4b représente une première variante de paroi à profil apodisé. Dans ce cas de figure, l'apodisation se traduit par un lissage des deux arrêtes présentent sur le sommet (S) de la paroi 18. L'épaisseur de la paroi mesurée à la tangente (D1) du sommet (S) de la paroi représente environ 90% de l'épaisseur de la paroi à sa base (B)

La figure 4c représente une seconde variante de paroi à profil apodisé. Dans ce cas de figure, l'apodisation se traduit par un lissage des deux arrêtes présentent à la base (B) de la paroi 18.

La figure 4d représente une quatrième variante de paroi à profil apodisé, dans lequel les deux arrêtes présentent au sommet ainsi qu'une arrêtes (A1) présente à la base sont lissées. Dans cette représentation la paroi présentent deux flancs à pente différente, le flanc (F1) présentant une pente à 45° et le flanc (F2) présentant une pente à 75° par rapport à la surface du substrat 16. L'épaisseur de la paroi mesurée à la tangente (D1) du sommet (S) de la paroi représente moins de 10% de l'épaisseur de la paroi à sa base (B).

La figure 4e représente une troisième variante de paroi à profil apodisé. Dans ce cas de figure, l'apodisation se traduit par un lissage des arrêtes au sommet (S) et à la base (B) de la paroi 18, le lissage étant symétrique et conduisant à une paroi apodisé à profil gaussien.

Le substrat transparent 16 peut être en verre ou en différents matériaux polymères couramment utilisés en optique ophtalmique. Parmi les matériaux polymères utilisables, on peut citer à titre indicatif et non limitatif, les matériaux polycarbonates; polyamides ; polyimides ; polysulfones ; copolymères de polyéthylènetérephtalate et polycarbonate; polyoléfines, notamment polynorbornènes ; polymères et copolymères de diéthylène glycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy; et polymères et copolymères épisulfide.

La couche 17 incorporant le réseau de cellules est de préférence située sur sa face avant convexe 12, la face arrière concave 13 restant libre pour être éventuellement remise en forme par usinage et polissage si cela est nécessaire. Le composant optique peut également être situé sur la face concave d'une lentille. Bien évidemment, le composant optique peut aussi être intégré sur un élément optique plan.

Les cellules sont remplies avec la substance à propriété optique, à l'état de liquide ou de gel. Un traitement préalable de la face avant du composant peut éventuellement être appliqué pour faciliter le mouillage en surface du matériau des parois et du fond des microcuves. La solution ou suspension formant la substance à propriété optique peut être la même pour toutes les microcuves du réseau, auquel cas elle peut être introduite simplement par immersion du composant dans un bain approprié, par un procédé de type sérigraphique, par un procédé de revêtement par centrifugation (procédé spin), par un procédé d'étalement de la substance à l'aide d'un rouleau ou d'une raclette, ou encore par un procédé de spray. Il est également possible de l'injecter localement dans les microcuves individuelles à l'aide d'une tête de projection d'encre.

Pour fermer hermétiquement un ensemble de microcuves remplies, on applique par exemple un film plastique collé, soudé thermiquement ou laminé à chaud sur le haut des parois 18. On peut aussi déposer sur la zone à obturer un matériau polymérisable en solution, non miscible avec la substance à propriété optique contenue dans les microcuves, puis faire polymériser ce matériau, par exemple à chaud ou sous irradiation.

Une fois que le réseau de microcuves 15 a été complété, le composant peut recevoir les couches ou revêtements supplémentaires 19, 20 pour terminer sa fabrication. Des composants de ce type sont fabriqués en série puis stockés pour être plus tard repris et découpés individuellement conformément aux besoins d'un client.

Si la substance à propriété optique n'est pas destinée à rester à l'état de liquide ou de gel, on peut lui appliquer un traitement de solidification, par exemple une séquence de chauffage et/ou d'irradiation, à un stade approprié à partir du moment où la substance a été déposée.

Dans une variante le composant optique constitué d'un réseau de microcuves est construit sous la forme d'un film transparent souple. Un tel film est réalisable par des techniques analogues à celles décrites précédemment. Dans ce cas le film est réalisable sur un support plan et non convexe ou concave.

Le film est par exemple fabriqué industriellement sur une étendue relativement grande, puis découpé aux dimensions appropriées pour être reporté sur le substrat 16 d'une ébauche. Ce report peut être effectué par collage du film souple, par thermoformage du film, voire par un phénomène physique d'adhérence sous vide. Le film peut ensuite recevoir divers revêtements, comme dans le cas précédent, ou bien être reporté sur le substrat 16 lui-même revêtu d'une ou plusieurs couches additionnelles telles que décrites précédemment.

Dans un domaine d'application de l'invention, la propriété optique de la substance introduite dans les microcuves 15 se rapporte à son indice de réfraction.. On module l'indice de réfraction de la substance le long de la surface du composant pour obtenir une lentille correctrice. Dans une première variante de l'invention, la modulation peut être réalisée en introduisant des substances d'indices différents lors de la fabrication du réseau de microcuves 15.

Dans une autre variante de l'invention, la modulation peut être réalisée en introduisant dans les microcuves 15 une substance dont l'indice de réfraction peut être réglé ultérieurement sous irradiation. L'inscription de la fonction optique correctrice est alors effectuée en exposant l'ébauche 10 ou le verre 11 à de la lumière dont l'énergie varie le long de la surface pour obtenir le profil d'indice souhaité afin de corriger la vision d'un patient. Cette lumière est typiquement celle produite par un laser, l'équipement d'écriture étant semblable à celui utilisé pour graver des CDROM ou autres supports optiques de mémoire. L'exposition plus ou moins grande de la substance photosensible peut résulter d'une modulation de la puissance du laser et/ou du choix du temps d'exposition.

Parmi les substances utilisables dans cette application, on peut citer, par exemple, les matériaux mésoporeux ou les cristaux liquides. Ces cristaux liquides peuvent être figés par une réaction de polymérisation, par exemple induite par irradiation. On peut ainsi les figer dans un état choisi pour introduire un retard optique déterminé dans les ondes lumineuses qui les traversent. Dans le cas d'un matériau mésoporeux le contrôle de l'indice de réfraction du matériau se fait au travers de la variation de sa porosité. Une autre possibilité est d'utiliser des photopolymères dont une propriété bien connue est de changer d'indice de réfraction au cours de la réaction de polymérisation induite par irradiation. Ces changements d'indice sont dus à une modification de la densité du matériau et à un changement de la structure chimique. On utilisera de préférence des photopolymères qui ne subissent qu'une très faible variation de volume lors de la réaction de polymérisation.

La polymérisation sélective de la solution ou suspension est réalisée en présence d'un rayonnement différencié spatialement par rapport à la surface du composant, afin d'obtenir la modulation d'indice souhaitée. Cette modulation est déterminée préalablement en fonction de l'amétropie estimée de l'oeil d'un patient à corriger.

Dans une autre application de l'invention, la substance introduite sous forme de gel ou de liquide dans les microcuves a une propriété de polarisation. Parmi les substances utilisées dans cette application on peut notamment citer les cristaux liquides.

Dans une autre application de l'invention, la substance introduite sous forme de liquide ou de gel dans les microcuves a une propriété photochromique. Parmi les substances utilisés dans cette application on peut citer à titre d'exemples les composés photochromiques contenant un motif central tel qu'un noyau spirooxazine, spiro-indoline[2,3']benzoxazine, chromène, spiroxazine homoazaadamantane, spirofluorène-(2H)-benzopyrane, naphto[2,1-b]pyrane.

Dans le cadre de l'invention la substance à propriété optique peut être un colorant, ou un pigment apte à apporter une modification du taux de transmission.

## Revendications

1. Procédé de réalisation d'un élément optique transparent, acceptable pour la réalisation d'un élément optique transparent choisi parmi les lentilles ophtalmiques, les lentilles de contact, les implants oculaires, les lentilles pour instruments d'optique, les lentilles de visée optique et les visières oculaires, comprenant l'étape de production d'un composant optique transparent ayant au moins un ensemble de cellules juxtaposées parallèlement à une surface du composant,
dans lequel, parallèlement à la surface du composant optique, les cellules sont de séparées par des parois d'épaisseur (e) comprise entre 0,10 µm et 10 µm,
chaque cellule étant hermétiquement fermée et contenant une substance à propriété optique,
les cellules étant séparées par des parois à profil apodisé, de façon à supprimer des lobes secondaires de diffusion par les parois d'une lumière transmise à travers le composant optique.

2. Procédé selon la revendication 1, dans lequel le profil apodisé de la paroi est obtenu lors d'une étape de lissage d'au moins une arrête de ladite paroi.

3. Procédé selon l'une quelconque des revendications 1 ou 2, dans lequel le profil apodisé de la paroi est obtenu lors d'une étape de lissage réalisée à la base et/ou au sommet de ladite paroi.

4. Procédé selon l'une des revendications précédentes, dans lequel l'étape de lissage est réalisée sur au moins une arrête du sommet de la paroi.

5. Procédé selon l'une des revendications précédentes, dans lequel l'étape de lissage est réalisée sur les deux arêtes du sommet de la paroi.

6. Procédé selon l'une des revendications précédentes, dans lequel le profil apodisé de la paroi comprend en plus la réalisation de ladite paroi dans laquelle chacun de ses deux flancs présente une pente identique dans un plan perpendiculaire à la surface du substrat.

7. Procédé selon l'une des revendications précédentes, dans lequel le profil apodisé de la paroi comprend en plus la réalisation de ladite paroi dans laquelle chacun de ses deux flancs présente une pente différente dans un plan perpendiculaire à la surface du substrat.

8. Procédé selon l'une des revendications précédentes, dans lequel le lissage des arêtes de la paroi est symétrique ou asymétrique.

9. Procédé selon l'une des revendications précédentes, dans lequel le lissage des arêtes fournit un profil gaussien à la paroi.

10. Procédé selon l'une des revendications précédentes, dans lequel le lissage de l'arrête est réalisé par un procédé de gravure chimique ou physico-chimique.

11. Procédé selon la revendication 10, dans le lequel le procédé est une gravure plasma.

12. Procédé selon l'une des revendications précédentes, dans lequel le profil apodisé de la paroi est obtenu directement lors de la production de ladite paroi, par utilisation d'un masque pendant ledit procédé de production, disposé à une distance variable et contrôlée du matériau constitutif de ladite paroi.

13. Procédé selon la revendication 12, dans lequel le procédé de production de ladite paroi est choisi parmi l'impression à chaud, l'embossage à chaud, le micromoulage, la photolithographie, la microdéposition, la sérigraphie, et l'impression par jet de matière.

14. Procédé selon la revendication 13, dans lequel le procédé de production est choisi parmi le micromoulage et la photolithographie.

15. Procédé selon l'une des revendications précédentes, dans lequel le profil apodisé de la paroi est obtenu par combinaison d'un procédé de gravure et d'un procédé de production de la paroi en présence d'un masque.

16. Procédé selon la revendication 1, comprenant en plus une étape de découpe du composant optique le long d'un contour défini sur ladite surface, correspondant à une forme déterminée pour l'élément optique.

17. Procédé selon l'une des revendications 1 et 16, comprenant en outre une étape de perçage à travers le composant optique, pour la fixation de l'élément optique sur un support de maintien.

18. Procédé selon l'une des revendications précédentes, dans lequel l'ensemble des cellules du composant optique est formé directement sur un support transparent rigide, ou au sein d'un film transparent souple reporté ensuite sur un support transparent rigide.

19. Procédé selon la revendication 18, dans lequel le support transparent rigide est choisi parmi convexe, concave, et plan sur le côté recevant l'ensemble des cellules.

20. Procédé selon l'une quelconque des revendications précédentes, comprenant la formation sur un substrat d'un réseau de parois à profil apodisé pour délimiter les cellules parallèlement à ladite surface du composant, un remplissage collectif ou individuel des cellules avec la substance à propriété optique sous forme de liquide ou de gel, et la fermeture des cellules sur leur côté opposé au substrat.

21. Composant optique, acceptable pour la réalisation d'un élément optique transparent choisi parmi les lentilles ophtalmiques, les lentilles de contact, les implants oculaires, les lentilles pour instruments d'optique, les lentilles de visée optique et les visières oculaires, comprenant au moins un ensemble transparent de cellules juxtaposées parallèlement à une surface du composant,
dans lequel, parallèlement à la surface du composant optique, les cellules sont séparées par des parois d'épaisseur (e) comprise entre 0,10 µm et 10 µm, chaque cellule étant hermétiquement fermée et contenant au moins une substance à propriété optique, et
chaque cellule étant séparée par des parois à profil apodisé, de façon à supprimer des lobes secondaires de diffusion par les parois d'une lumière transmise à travers le composant optique.

22. Composant optique selon la revendication 21, dans lequel la substance à propriété optique contenue dans certaines au moins des cellules est sous forme de liquide ou de gel.

23. Composant optique selon la revendication 21 ou 22, dans lequel la propriété optique est choisie parmi une propriété de coloration, de photochromisme, de polarisation et d'indice de réfraction.

24. Composant optique selon l'une quelconque des revendications 21 à 23, dans lequel l'épaisseur des parois est comprise entre 0,5 µm et 8 µm.

25. Composant optique selon l'une quelconque des revendications 21 à 23, dans lequel l'épaisseur à la base de la paroi est supérieure à l'épaisseur à la tangente du sommet de ladite paroi.

26. Composant optique selon la revendication 25, dans lequel l'épaisseur de la paroi à la tangente de son sommet (S) est comprise entre 5% et 95% de l'épaisseur à la base (B) de ladite paroi.

27. Composant optique selon l'une des revendications 21 à 26, dans lequel les parois présentent une hauteur comprise entre 1 µm et 50 µm, et préférentiellement entre 1 µm et 20 µm.

28. Composant optique selon l'une des revendications 21 à 27, dans lequel les deux flancs d'une paroi sont identiques ou différents.

29. Composant optique selon l'une des revendications 21 à 28, dans lequel la pente du flanc d'une paroi est comprise entre 90° et 15° par rapport à une droite parallèle à la surface du substrat.

30. Composant optique selon la revendication 29, dans lequel la pente du flanc d'une paroi est comprise entre 90° et 45° par rapport à une droite parallèle à la surface du substrat.

31. Composant optique selon l'une des revendications 21 à 30, dans lequel le facteur de remplissage est compris entre 90% et 99,5%.

32. Composant optique selon l'une des revendications 21 à 31, dans lequel les parois à profil apodisé au moins une arrête lissée.

33. Composant optique selon l'une des revendications 21 à 32, dans lequel les parois sont apodisées à leur base et/ou leur sommet.

34. Composant optique selon l'une des revendications 21 à 33, dans lequel les parois sont apodisées sur au moins une arrête du sommet de la paroi.

35. Composant optique selon l'une des revendications 21 à 34, dans lequel les parois sont apodisées sur les deux arêtes du sommet de la paroi de façon symétrique ou asymétrique.

36. Composant optique selon l'une des revendications 21 à 35, dans lequel les parois présentent deux flancs à pentes identiques dans un plan perpendiculaire à la surface du substrat.

37. Composant optique selon l'une des revendications 21 à 35, dans lequel les parois présentent deux flancs à pentes différentes dans un plan perpendiculaire à la surface du substrat.

38. Utilisation d'un composant optique selon l'une quelconque des revendications 21 à 37 dans la fabrication d'un élément optique transparent choisi parmi les lentilles ophtalmiques, les lentilles de contact, les implants oculaires, les lentilles pour instruments d'optiques, les lentilles de visée optique et les visières oculaires.

39. Verre de lunettes réalisé en découpant un composant optique selon l'une quelconque des revendications 21 à 37.

40. Verre de lunettes selon la revendication 39, dans lequel au moins un perçage est réalisé à travers le composant (10) pour la fixation du verre (11) sur une monture.

## Patentansprüche

1. Verfahren zum Herstellen eines lichtdurchlässigen optischen Elements, das akzeptabel ist für die Herstellung eines lichtdurchlässigen optischen Elements, das gewählt ist unter ophthalmischen Linsen, Kontaktlinsen, Okularimplantaten, Linsen für optische Instrumente, Linsen für optisches Zielen und Okularblenden, das den Schritt des Produzierens einer lichtdurchlässigen optischen Komponente umfasst, die wenigstens eine Anordnung von Zellen besitzt, die parallel zu einer Fläche der Komponente nebeneinander liegen,
wobei parallel zu der Fläche der optischen Komponente die Zellen durch Wände mit einer Dicke (e) im Bereich von 0,10 µm bis 10 µm getrennt sind,
wobei jede Zelle hermetisch geschlossen ist und eine Substanz mit optischer Eigenschaft enthält,
wobei die Zellen durch Wände mit apodisiertem Profil getrennt sind, derart, dass sekundäre Keulen der Diffusion durch die Wände von Licht, das durch die optische Komponente durchgelassen wird, unterdrückt werden.

2. Verfahren nach Anspruch 1, wobei das apodisierte Profil der Wand in einem Schritt des Glättens wenigstens einer Kante der Wand erhalten wird.

3. Verfahren nach einem der Ansprüche 1 oder 2, wobei das apodisierte Profil der Wand in einem Schritt des Glättens erhalten wird, der an der Basis und/oder am Scheitel der Wand ausgeführt wird.

4. Verfahren nach einem der vorhergehenden Ansprüche, wobei der Glättungsschritt an wenigstens einer Kante des Scheitels der Wand ausgeführt wird.

5. Verfahren nach einem der vorhergehenden Ansprüche, wobei der Glättungsschritt an den zwei Kanten des Scheitels der Wand ausgeführt wird.

6. Verfahren nach einem der vorhergehenden Ansprüche, wobei das apodisierte Profil der Wand außerdem die Herstellung der Wand umfasst, in der die zwei Seitenflächen jeweils eine Steigung aufweisen, die in einer Ebene senkrecht zu der Oberfläche des Substrats gleich sind.

7. Verfahren nach einem der vorhergehenden Ansprüche, wobei das apodisierte Profil der Wand außerdem die Herstellung der Wand umfasst, in der die zwei Seitenflächen jeweils eine Steigung aufweisen, die in einer Ebene senkrecht zu der Oberfläche des Substrats verschieden sind.

8. Verfahren nach einem der vorhergehenden Ansprüche, wobei die Glättung der Kanten der Wand symmetrisch oder asymmetrisch ist.

9. Verfahren nach einem der vorhergehenden Ansprüche, wobei die Glättung der Kanten für die Wand ein gaußsches Profil ergibt.

10. Verfahren nach einem der vorhergehenden Ansprüche, wobei die Glättung der Kante durch ein Verfahren des chemischen oder physikalisch-chemischen Ätzens ausgeführt wird.

11. Verfahren nach Anspruch 10, wobei das Verfahren ein Plasmaätzen ist.

12. Verfahren nach einem der vorhergehenden Ansprüche, wobei das apodisierte Profil der Wand direkt bei der Herstellung der Wand erhalten wird, indem eine Maske während des Produktionsverfahrens verwendet wird, die in einem veränderlichen und gesteuerten Abstand von dem die Wand bildenden Material angeordnet wird.

13. Verfahren nach Anspruch 12, wobei das Verfahren zum Produzieren der Wand gewählt ist unter Warmdrücken, Warmziehen, Mikrogießformen, Photolithographie, Mikroabscheidung, Siebdruck und Materialstrahldruck.

14. Verfahren nach Anspruch 13, wobei das Produktionsverfahren unter Mikrogießformen und Photolithographie gewählt wird.

15. Verfahren nach einem der vorhergehenden Ansprüche, wobei das apodisierte Profil der Wand durch Kombinieren eines Ätzverfahrens und eines Verfahrens zum Produzieren der Wand in Gegenwart einer Maske erhalten wird.

16. Verfahren nach Anspruch 1, das außerdem einen Schritt des Abschneidens der optischen Komponente längs eines auf der Oberfläche definierten Umrisses, der einer durch das optische Element bestimmten Form entspricht, umfasst.

17. Verfahren nach einem der Ansprüche 1 bis 16, das außerdem einen Schritt des Durchlochens der optischen Komponente für die Befestigung des optischen Elements an einem Halteträger umfasst.

18. Verfahren nach einem der vorhergehenden Ansprüche, wobei die Anordnung der Zellen der optischen Komponente direkt auf einem starren lichtdurchlässigen Träger oder innerhalb eines nachgiebigen lichtdurchlässigen Films, der anschließend auf einen starren lichtdurchlässigen Träger aufgebracht wird, gebildet ist.

19. Verfahren nach Anspruch 18, wobei der starre lichtdurchlässige Träger unter konvex, konkav und eben auf der die Anordnung der Zellen aufnehmenden Seite gewählt ist.

20. Verfahren nach einem der vorhergehenden Ansprüche, das das Bilden eines Netzes von Wänden mit apodisiertem Profil auf einem Substrat, um die Zellen parallel zu der Oberfläche der Komponente zu begrenzen, ein gemeinsames oder individuelles Befüllen der Zellen mit der Substanz mit optischer Eigenschaft in Form einer Flüssigkeit oder eines Gels und das Verschließen der Zellen auf ihrer dem Substrat gegenüberliegenden Seite umfasst.

21. Optische Komponente, die akzeptabel ist für die Herstellung eines lichtdurchlässigen optischen Elements, das aus ophthalmischen Linsen, Kontaktlinsen, Okularimplantaten, Linsen für optische Instrumente, Linsen für optisches Zielen und Okularblenden gewählt ist, die wenigstens eine lichtdurchlässige Anordnung von Zellen enthält, die parallel zu einer Oberfläche der Komponente nebeneinander liegen,
wobei parallel zu der Oberfläche der optischen Komponente die Zellen durch Wände mit einer Dicke (e) im Bereich von 0,10 µm bis 10 µm getrennt sind,
wobei jede Zelle hermetisch geschlossen ist und wenigstens eine Substanz mit optischer Eigenschaft enthält und
wobei jede Zelle durch die Wände mit apodisiertem Profil getrennt ist, derart, dass sekundäre Keulen der Diffusion durch die Wände von Licht, das durch die optische Komponente durchgelassen wird, unterdrückt werden.

22. Optische Komponente nach Anspruch 21, wobei die Substanz mit optischer Eigenschaft, die wenigstens in bestimmten Zellen enthalten ist, die Form einer Flüssigkeit oder eines Gels hat.

23. Optische Komponente nach Anspruch 21 oder 22, wobei die optische Eigenschaft unter einer Färbeeigenschaft, einer Photochromismuseigenschaft, einer Polarisationseigenschaft und einer Brechungsindexeigenschaft gewählt ist.

24. Optische Komponente nach einem der Ansprüche 21 bis 23, wobei die Dicke der Wände im Bereich von 0,5 µm bis 8 µm liegt.

25. Optische Komponente nach einem der Ansprüche 21 bis 23, wobei die Dicke an der Basis der Wand größer ist als die Dicke bei der Tangente an den Scheitel der Wand.

26. Optische Komponente nach Anspruch 25, wobei die Dicke der Wand bei der Tangente an ihren Scheitel (S) im Bereich von 5 % bis 95 % der Dicke der Basis (B) der Wand liegt.

27. Optische Komponente nach einem der Ansprüche 21 bis 26, wobei die Wände eine Höhe besitzen, die im Bereich von 1 µm bis 50 µm und vorzugsweise im Bereich von 1 µm bis 20 µm liegt.

28. Optische Komponente nach einem der Ansprüche 21 bis 27, wobei die zwei Seitenflächen einer Wand gleich oder unterschiedlich sind.

29. Optische Komponente nach einem der Ansprüche 21 bis 28, wobei die Steigung der Seitenfläche einer Wand im Bereich von 90° und 15° in Bezug auf eine Gerade parallel zu der Oberfläche des Substrats liegt.

30. Optische Komponente nach Anspruch 29, wobei die Steigung der Seitenfläche einer Wand im Bereich von 90° bis 45° in Bezug auf eine Gerade parallel zu der Oberfläche des Substrats liegt.

31. Optische Komponente nach einem der Ansprüche 21 bis 30, wobei der Befüllungsfaktor im Bereich von 90 % bis 99,5 % liegt.

32. Optische Komponente nach einem der Ansprüche 21 bis 31, wobei die Wände mit apodisiertem Profil wenigstens eine geglättete Kante haben.

33. Optische Komponente nach einem der Ansprüche 21 bis 32, wobei die Wände an ihrer Basis und/oder ihrem Scheitel apodisiert sind.

34. Optische Komponente nach einem der Ansprüche 21 bis 33, wobei die Wände an wenigstens einer Kante des Scheitels der Wand apodisiert sind.

35. Optische Komponente nach einem der Ansprüche 21 bis 34, wobei die Wände an ihren zwei Kanten des Scheitels der Wand symmetrisch oder asymmetrisch apodisiert sind.

36. Optische Komponente nach einem der Ansprüche 21 bis 35, wobei die Wände zwei Seitenflächen mit gleichen Steigungen in einer Ebene senkrecht zu der Oberfläche des Substrats aufweisen.

37. Optische Komponente nach einem der Ansprüche 21 bis 35, wobei die Wände zwei Seitenflächen mit unterschiedlichen Steigungen in einer Ebene senkrecht zu der Oberfläche des Substrats aufweisen.

38. Verwendung einer optischen Komponente nach einem der Ansprüche 21 bis 37 bei der Fertigung eines lichtdurchlässigen optischen Elements, das unter ophthalmischen Linsen, Kontaktlinsen, Okularimplantaten, Linsen für optische Instrumente, Linsen für optisches Zielen und Okularblenden gewählt ist.

39. Brillenglas, das durch Ausschneiden einer optischen Komponente nach einem der vorhergehenden Ansprüche 21 bis 37 hergestellt wird.

40. Brillenglas nach Anspruch 39, wobei wenigstens eine Durchlochung durch die Komponente (10) für die Befestigung des Glases (11) an einem Gestell verwirklicht ist.

## Claims

1. Method of producing a transparent optical element, acceptable for producing a transparent optical element chosen from ophthalmic lenses, contact lenses, ocular implants, lenses for optical instruments, optical sight lenses and ocular visors, which includes the step of producing a transparent optical component having at least one set of cells juxtaposed parallel to one surface of the component, in which the cells, parallel to the surface of the optical component, are separated by walls having a thickness (e) of between 0.10 µm and 10 µm,
each cell being hermetically sealed and containing a substance having an optical property,
the cells being separated by walls having an apodized profile so as to eliminate side lobes of scattering by the walls of light transmitted through the optical component.

2. Method according to Claim 1, in which the apodized profile of the wall is obtained during a step of smoothing at least one edge of said wall.

3. Method according to either of Claims 1 and 2, in which the apodized profile of the wall is obtained during a smoothing step carried out at the base and/or at the top of said wall.

4. Method according to one of the preceding claims, in which the smoothing step is carried out on at least one edge of the top of the wall.

5. Method according to one of the preceding claims, in which the smoothing step is carried out on both edges of the top of the wall.

6. Method according to one of the preceding claims, in which the apodized profile of the wall additionally includes the production of said wall in which each of these two flanks have an identical slope in a plane perpendicular to the surface of the substrate.

7. Method according to one of the preceding claims, in which the apodized profile of the wall additionally includes the production of said wall in which each of its two flanks have a different slope in a plane perpendicular to the surface of the substrate.

8. Method according to one of the preceding claims, in which the smoothing of the wall edges is symmetrical or asymmetrical.

9. Method according to one of the preceding claims, in which the smoothing of the edges provides the wall with a Gaussian profile.

10. Method according to one of the preceding claims, in which the smoothing of the edge is carried out by a chemical or physico-chemical etching process.

11. Method according to Claim 10, in which the process is plasma etching.

12. Method according to one of the preceding claims, in which the apodized profile of the wall is obtained directly during production of said wall, by the use of a mask during said method of production, which is placed at a variable and controlled distance from the material constituting said wall.

13. Method according to Claim 12, in which the process for producing said wall is chosen from hot printing, hot embossing, micromolding, photolithography, microdeposition, screen printing and ink jet printing.

14. Method according to Claim 13, in which the production process is chosen from micromolding and photolithography.

15. Method according to one of the preceding claims, in which the apodized profile of the wall is obtained by combining an etching process with a wall production process in the presence of a mask.

16. Method according to Claim 1, which additionally includes a step of cutting the optical component along a defined contour on said surface, corresponding to a defined shape for the optical element.

17. Method according to one of Claims 1 to 16, which furthermore includes a step of drilling through the optical component in order to fasten the optical element to a retention support.

18. Method according to one of the preceding claims, in which the set of cells of the optical component is formed directly on a rigid transparent support, or within a flexible transparent film subsequently transferred onto a rigid transparent support.

19. Method according to Claim 18, in which the rigid transparent support is chosen to be convex or concave, and plane on that side receiving the set of cells.

20. Method according to any one of the preceding claims, which includes the formation on a substrate of an array of walls of apodized profile in order to define the cells parallel to said surface of the component, the collective or individual filling of the cells with the substance having an optical property in liquid or gel form, and the sealing of the cells on their opposite side from the substrate.

21. Optical component, acceptable for producing a transparent optical element chosen from ophthalmic lenses, contact lenses, ocular implants, lenses for optical instruments, optical sight lenses and ocular visors, comprising at least one transparent set of cells juxtaposed parallel to one surface of the component,
in which the cells, parallel to the surface of the optical component, are separated by walls having a thickness (e) of between 0.10 µm and 10 µm, each cell being hermetically sealed and containing at least one substance having an optical property, and each cell being separated by walls with an apodized profile so as to eliminate side lobes of scattering by the walls of light transmitted through the optical component.

22. Optical component according to Claim 21, in which the substance having an optical property contained in at least some of the cells is in liquid or gel form.

23. Optical component according to Claim 21 or 22, in which the optical property is chosen from a coloration property, a photochromism property, a polarization property and a refractive index property.

24. Optical component according to one of Claims 21 to 23, in which the thickness of the walls is between 0.5 µm and 8 µm.

25. Optical component according to one of Claims 21 to 23, in which the thickness at the base of the wall is greater than the tangential thickness of the top of said wall.

26. Optical component according to Claim 25, in which the tangential thickness of the top (S) of the wall is between 5% and 95% of the thickness of the base (B) of said wall.

27. Optical component according to one of Claims 21 to 26, in which the walls have a height of between 1 µm and 50 µm, and preferably between 1 µm and 20 µm.

28. Optical component according to one of Claims 21 to 27, in which the two flanks of a wall are identical or different.

29. Optical component according to one of Claims 21 to 28, in which the slope of the flank of one wall is between 90° and 15° to a straight line parallel to the surface of the substrate.

30. Optical component according to Claim 29, in which the slope of the flank of one wall is between 90° and 45° to a straight line parallel to the surface of the substrate.

31. Optical component according to one of Claims 21 to 30, in which the fill factor is between 90% and 99.5%.

32. Optical component according to one of Claims 21 to 31, in which the walls of apodized profile have at least one smoothed edge.

33. Optical component according to one of Claims 21 to 32, in which the walls are apodized at their base and/or their top.

34. Optical component according to one of Claims 21 to 33, in which the walls are apodized on at least one edge of the top of the wall.

35. Optical component according to one of Claims 21 to 34, in which the walls are apodized on both edges of the top of the wall symmetrically or asymmetrically.

36. Optical component according to one of Claims 21 to 35, in which the walls have two flanks of identical slopes in a plane perpendicular to the surface of the substrate.

37. Optical component according to one of Claims 21 to 35, in which the walls have two flanks of different slopes in a plane perpendicular to the surface of the substrate.

38. Use of an optical component according to any one of Claims 21 to 37 in the manufacture of a transparent optical element chosen from ophthalmic lenses, contact lenses, ocular implants, lenses for optical instruments, optical sight lenses and ocular visors.

39. Spectacle lens produced by cutting an optical component according to any one of Claims 21 to 37.

40. Spectacle lens according to Claim 39, in which at least one hole is drilled through component (10) in order to fasten the lens (11) to a spectacle frame.
